# EUROPEAN PATENT SPECIFICATION

(11) **EP 4 218 423 B1**
(45) Date of publication and mention of the grant of the patent: **17.09.2025**
(21) Application number: 22153379.7
(22) Date of filing: 26.01.2022
(51) Int. Cl.: A23L 5/00, A23L 5/10

(54) **TWO-STEP COOKING**
ZWEISTUFIGES KOCHEN
CUISSON EN DEUX ÉTAPES

(43) Date of publication of application: 02.08.2023
(73) Proprietor: Bühler AG, 9240 Uzwil (CH)
(72) Inventor: WOODING, Vaughan, 9230 Flawil (CH); STEINER, Benjamin, 5400 Baden (CH); BÄRTSCH, Christian, 8006 Zürich (CH)
(74) Representative: Vossius & Partner Patentanwälte Rechtsanwälte mbB

(56) References cited:
- WO-A1-2014/123420
- WO-A1-2021/125956
- US-A- 5 829 224
- US-A1- 2017 325 431

## Description

The present invention relates to a method for processing insects or insect larvae.

Insects for food or feed production eat a wide range of feedstocks from processing wastes, to food wastes to cheap animal feed. These feedstocks can be host to a wide variety of pathogens that can be harmful to people. Usually these pathogens are not harmful to the insect themselves but can be harmful to the person who eventually eats the insects. Most pathogens are killed to a sufficiently safe level by a single cooking or decontamination step, however, certain pathogens e.g. bacillus cereus are able to form resistant spores which can survive extreme conditions. These sorts of pathogens require a more complicated and better designed decontamination process.

Moreover, discoloration is quite common during cooking and thermal treatments of food products. For many products this may be acceptable, but for insects the colour and look of the product are an important factor.

The present invention has been made in view of the above problems. In particular, the present invention provides a method which effectively removes even resistant pathogens from insects or insect larvae while preserving certain properties of the insects, thus leading to a safer and more appealing food product.

US 5 829 224 A relates to a method and apparatus for producing an aseptic heterogeneous food.

The invention is defined in the independent claims. Dependent claims describe preferred embodiments.

The present invention relates to a method for processing insects or insect larvae. The method comprises a first heating step of heating the insects or insect larvae in a first fluid at a temperature of 40°C to 105°C, a cooling step of cooling the insects or insect larvae in a second fluid and a second heating step of heating the insects or insect larvae in a third fluid at a temperature of 40°C to 105°C, wherein the second heating step is performed after the cooling step.

Various embodiments may preferably implement the following features.

Preferably, at least one of the first, second and third fluid is water or steam. The fluid may also be a gas.

A fluid may allow an efficient heat transfer due to direct contact with the product, i.e. the insects or insect larvae. Water may be beneficial due to the fact that it does not contaminate the product (e.g. by chemicals or other additives).

The first heating step is preferably performed at a temperature of 75°C to 105°C and preferably has a duration of 5 to 15 minutes, more preferably 8-12 minutes.

In the first heating step - besides inactivation of vegetative microorganisms and the larvae itself (if provided alive) - the resistant forms of the pathogens, namely spores, are activated, so that they will germinate and become vegetative cells after cooling. If the temperature is too high or too low, the activation of spores will not happen and they will keep being spores after cooling. In addition, if there is not sufficient heating time, spores will not be activated as well. However, the heating time should only be as short as necessary, because long heating exposure times will have a negative effect of the product quality (e.g. color).

The cooling step is preferably performed at a temperature of 10°C to 30°C, more preferably 20-25°C and preferably has a duration of 10 to 45 minutes, more preferably 25-35 minutes. After cooling activated spores to a certain temperature range, they germinate and become vegetative cells after a certain time. If the temperature is too low or too high the activated spores will not germinate. Also, if there is not sufficient cooling time provided, spores will not have sufficient time to germinate, which would have the effect that they are not inactivated in the second heating step. Providing more cooling time to the product than necessary for spore germination makes the process less efficient, because the cooling equipment is occupied longer than necessary.

The second heating step is preferably performed at a temperature of 75°C to 105°C and has a duration of 10 seconds to 5 minutes, preferably, 10 seconds to 1.5 minutes. In the second heating step the vegetative cells of pathogens resulting from spore germination during cooling are inactivated. The inactivation of these vegetative cells happens at the right temperature-time combination. The higher the temperature the lower the time can be to achieve the same inactivation characteristics. Exceeding the upper limits of the temperature and time range would have negative effects on product quality. Below a temperature of 75°C, a very long exposure time would be needed, which makes the process and equipment use inefficient. The lower limit of 10 seconds for the heat exposure time is elected, because it can still be adequately measured and validated, which is a requirement in industrial operations.

At higher temperatures, shorter times for the heating step(s) can be applied in order to inactivate pathogens.

The method may be performed automatically. On industrial scale, the steps should be carried out automatically and not manually, because this will help to keep personnel costs at a lower level.

The first heating step and/or the second heating step and/or the cooling step may involve spreading the insects, in particular for preventing the insects or larvae from clustering and thus clogging the facility. For thermal treatments it is necessary that at every point of the product the temperature and time combination apply. Spreading insects helps to reduce the distance from the surface to the centre of the product. Thus, it takes less time to achieve the desired temperature in the entire product. Furthermore, spreading the insects allows for air to reach the insects, which prevents anaerogenic bacteria to proliferate (e.g. *Clostridium spp.*)*.*

The method may further comprise separating the insects or insect larvae from the fluid after the first heating step and/or the cooling step and/or the second heating step. Using different fluids in the different steps will help to save energy, because only the product needs to be brought to the new temperature and not the fluid as well. In addition, the fluid will also remove contaminations (e.g. frass residues) that might be attached to the surface of the larvae. So, if larvae are separated in-between the steps, the contaminations are not carried over from one to the other fluid.

Preferably, the larvae are stored in a buffer tank after the second heating step. After the second heating step there might be further processing of the larvae (e.g. drying, freezing). The capability to store larvae in a buffer time enables to decouple inactivation from further processing thus giving more operational flexibility.

Additional insects or insect larvae may be added for the second heating step. Not all larvae may contain spores. In these larvae only an inactivation of vegetative pathogens is needed, which is achieved by the second heating step. Allowing to add larvae before the second heating step enables an insect producer to process larvae with and without spores at the same time.

Preferably, the larvae are transported, preferably together with the fluid, by pumps between the first heating step, the cooling step and the second heating step. The fluid serves as a buffer and minimizes direct interaction of the larvae with hard surfaces. That is why the transport of the larvae in the fluid ensures a gentle transport from one to the other equipment.

The method may be performed with live or dead insects or insect larvae. If the insects enter alive, the first heating step - besides the food safety related functions - will inactivate the larvae very quickly. A quick inactivation is needed from animal welfare perspectives. However, there are other techniques for inactivation of larvae that might be performed before the two-step cooking process.

The method may further comprise an additional heating step before the first heating step. Preferably, the heating step is performed at a temperature of 90°C to 110°C. In the first heating step when using live insects, larvae inactivation and spore activation happens at the same time. However, live larvae are inactivated more quickly at higher temperatures. The larvae may be added in such a quantity that they cool the liquid from an initial temperature of 100°C (desirable for fast killing) to a temperature which is desirable for spore activation. If the larvae inactivation shall be decoupled from spore activation, an additional thermal treatment step is needed.

The insects or insect larvae are preferably kept in water for at least 50% of the processing time, more preferably at least 80%. Keeping the larvae in water ensures uniform temperature distribution and ensures they are not in contact with oxygen from air, thus preventing discoloration by oxidation of the fat. In addition, the larvae are better protected against damage from hitting hard surfaces when kept in water. Last but not least, by keeping larvae in water they can be pumped and are thus easier to be transported from section to section. According to an example of the present disclosure, a system for processing insects or insect larvae, preferably using the method as described above, is described, the system comprising first, second and third processing tanks, each one configured to include insects or insect larvae in a first, second and third fluid, respectively. The first processing tank comprises heating means for heating and/or maintaining the first fluid at a temperature of 40°C to 105°C. The second processing tank comprises cooling means for cooling the second fluid and the third processing tank comprises heating means for heating and/or maintaining the third fluid at a temperature of 40°C to 105°C. The system further comprises pumps for transporting the insect or insect larvae from the first tank to the second tank and to the third tank. The system allows a continuous process to achieve a safe product with a reduced number of spores.

In addition to the above embodiments and advantages connected thereto, the invention is further described with reference to the attached drawings. Therein,
Fig. 1 shows a basic configuration of an exemplary embodiment of the present disclosure, and
Fig. 2 shows a configuration of an exemplary embodiment of the present disclosure.

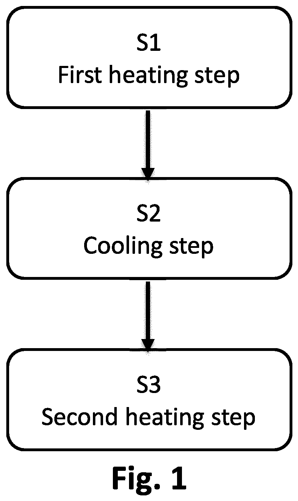

Fig. 1 shows a basic configuration of the method for processing insects or insect larvae according to the present disclosure. Therein, the method comprises a first heating step S1, which is performed in a first fluid at a temperature of 40°C to 105°C. Preferably, the first heating step is performed at 75°C to 90°C, more preferably at 80°C. It is possible use water at a temperature of 100°C of which the temperature will be reduced to around 80°C when cold larvae are added. The larvae may be held at a temperature of 80°C for 10 min to induce sporulation. Subsequently, the insects or insect larvae are cooled in a cooling step S2 in a second fluid and, after step S2, heated in a third fluid in a second heating step S3 at a temperature of 40°C to 105°C. Preferably, the second heating step is performed at 80°C to 95°C, more preferably at 90°C. The temperatures and exposure times of the first heating step S1 and the second heating step S3 may be the same or may differ from each other. However, the sporulation temperature and the inactivation temperature for vegetative cells does not need to be the same.

The fluid may be water, in any of its states of aggregation, or a suitable gas. The first and the third fluid may be water or steam. The second fluid may be water or gas which is introduced into a cooling tunnel. In the present disclosure, insects or insect larvae which may be processed dead or alive may be used. Moreover, the terms "heating step" and "cooking step" may be used interchangeably.

The method may further comprise an initial heating step before the first heating step S1 which is performed at a temperature of 90°C to 110°C, preferably at 100°C. This initial heating step will quickly inactivate and kill the larvae, which is preferred for animal welfare considerations.

The cooling step S2 may be performed at a temperature of 10°C to 30°C, preferably 20-25°C. The first heating step S1 may have a duration of 5 to 15 minutes, preferably 10 minutes. The cooling step S2 may have a duration of 10 to 45 minutes, preferably 30 minutes. The second heating step S3 may have a duration of 10 seconds to 5 minutes, preferably, 10 seconds to 1.5 minutes.

The insects or insect larvae, in particular live insects or insect larvae, may be spread during at least one of the above steps S1, S2, S3. Thereby, clustering of the animals should be prevented. For this purpose, a vibrating spreader, a stirrer, if the insects are stored in a liquid, or another suitable means may be utilised.

The insects or insect larvae may be separated from the fluid after the first heating step S1 and/or the cooling step S2 and/or the second heating step S3. In the case of water, a water separator may be used as described below.

The insects or insect larvae may be stored in a buffer tank after the second heating step S3. Additional insects or insect larvae may be added for the second heating step S3. The insects or insect larvae may be transported, preferably together with the fluid, by pumps between the first heating step, the cooling step and the second heating step. Alternatively, elevators or conveyor belts may be used.

The method may also be performed automatically.

In accordance with the basic method described with reference to Fig. 1, the present disclosure encompasses a corresponding system for processing insects or insect larvae, preferably using the method as described above. The system comprises first, second and third processing tanks, each one configured to include insects or insect larvae in a first, second and third fluid, respectively. The first processing tank comprises heating means for heating and/or maintaining the first fluid at a temperature of 40°C to 105°C. The second processing tank comprises cooling means for cooling the second fluid. The third processing tank comprises heating means for heating and/or maintaining the third fluid at a temperature of 40°C to 105°C. The system further comprises pumps for transporting the insect or insect larvae from the first tank to the second tank and from the second tank to the third tank. The above temperature ranges and specification of the fluid as well as further configurations equally apply.

Alternatively, the system may comprise one tank of which the temperature may be changed according to the first heating step, the cooling step and the second heating step.

In further embodiment, the system may comprise pipes or belts, in which the larvae are heated and cooled with the fluid or gas during the transport.

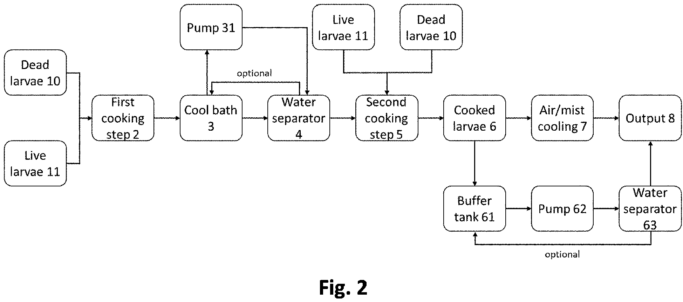

Fig. 2 shows a further exemplary configuration of the present disclosure which is compatible with the above description. In the largest configuration, the present disclosure encompasses a method, and means of a corresponding system, comprising a first cooking step 2 (first heating step S1) which may be performed using dead larvae 10 and/or live larvae 11 or insects, respectively. In the present example, water is used as the fluid. The first cooking step 2 is also able to act as a killing step, with a spreading device required to ensure that the larvae fall in uniformly and not in clumps.

After cooking, the larvae are cooled in a cool bath 3 (cooling step S2) and may be pumped 31 to a water separator 4 and/or provided by other means to the water separator 4. In particular, the larvae may float in the cooling fluid to the water separator 4, may be moved using gravity or mechanical means such as screws or elevators capable of transporting the larvae without destroying them. Optionally, water may be recirculated from the water separator 4 to the cool bath 3 by a pump (not shown). The cooling bath 3 contributes that the insects or insect larvae do not discolour.

The larvae are then provided to a cooking step 5 (second heating step S3) in order to obtain the final cooked larvae 6. Additional live larvae 11 or dead larvae 10 may be added to the cooking step 5 or alternatively, the process may start at the cooking step 5, i.e. without the pre-processing.

The cooked larvae 6 may then be cooled 7 by air, mist of water or another suitable fluid in order to obtain the final product 8. A part of the cooked larvae 6 or all of the cooked larvae 6 may be transported to a buffer tank 61. The larvae may be stored in water, another suitable fluid or without addition of a fluid. A pump 62 may be provided to transport the larvae or the larvae together with the water to a water separator 63. Optionally, the fluid may be recirculated to the buffer tank 61 by a pump (not shown).

Further cooking steps, i.e. before and/or after the first cooking step 2 (S1) may also be performed at temperatures similar to the last cooking step 5 (S3), but for longer time periods. The flow diagram in Fig. 2 as described above shows a second cooking step 5 and cooling step 7 required for good eradication of bacillus cereus, a common pathogen found in insect feedstocks. The times in either of these steps may be, e.g., 10 minutes at 80°C for step 2 (S1), 30 minutes at 25°C for step 3 (S2) and 3 minutes at 75°C for step 5 (S3).

Usually times longer than 45 minutes in the cooling bath would, however, lead to pathogen repopulation and (heat resistant) toxin production by desporulated pathogens. Cooking temperatures between 40°C to 75°C could also be used, however, the corresponding cooking time would also need to increase. Temperatures above 75°C would lead to shorter cooking times.

Pumps, buffers and water return loops are all optional steps that can be used in different scenarios. For example, in a full system as illustrated in Fig. 2, the larvae may be pumped across a forklift isle after the cooling bath 3. The buffer 61 at the end would then allow for further processing steps to be performed as batches rather than continuous.

Table 1 is a non-exhaustive overview of possible configurations according to the present disclosure. In particular, the first line indicates the respective configurations while the rows indicate, which elements are necessary for said particular configuration (marked by an "X").

**Table 1: Exemplary configurations according to Fig. 2**

| **Possible functions** | **1-step cooking** | **2-step cooking** | **2-step cooking with larvae killing** | **2-step cooking with larvae pumping** | **2-step cooking with larvae buffer** |
|---|---|---|---|---|---|
| Dead larvae input 10 | X | X | | X | X |
| Live larvae input 11 | | | X | | |
| Vibrating spreader | | | X | | |
| First cooking step 2 (S1) | | X | X | X | X |
| Cooling bath 3, S2 | | X | X | X | X |
| Larvae pump 31 | | | | X | |
| Water separator 4 | | X | X | X | X |
| Second cooking step 5 (S3) | X | X | X | X | X |
| Air/mist cooling jet 7 | X | X | X | X | |
| Buffer tank 61 | | | | | X |
| Larvae pump 62 | | | | | X |
| Water separator 63 | | | | | X |

Hence, the 1-step cooking configuration utilises dead larvae 10 which are cooked 5 (i.e. without the pre-processing 2, 3, 31, 4) and cooled 7 in order to obtain the final product 8.

For the 2-step cooking configuration according to this example, dead larvae 10 are used which are cooked in a first cooking step 2, cooled in a cool bath 3 and subsequently the water is separated in the water separator 4. Moreover, the larvae are exposed to the second cooking step 5, S3 and subsequent cooling 7.

The 2-step cooking configuration with larvae killing utilises live larvae 11, which are prevented from clustering by a vibrating spreader such as a vibrating screen. The larvae are killed in the cooking step 2, before being cooled 3, separated from the cold water 4, heated for a second time 5 and subsequently cooled 7 in order to obtain the final product 8.

The vibrating spreader can potentially be positioned before the larvae enter one of the three major steps (first cooking step, cooling step, second cooking step). In particular, in the case of live larvae the vibrating spreader ensures that the quickest possible larvae inactivation takes place.

The 2-step cooking configuration with larvae pumping comprises the cooking step 2, cooling 3, pumping 31 of the larvae with an optional water recirculation to the water separator 4, before the second heating step 5 with subsequent cooling 7.

The 2-step cooking configuration with larvae buffer comprises the first cooking step 2, S1, the cool bath 3, S2, water separation 4 and a further cooking step 5, S3. The cooked larvae 6 are then stored in a buffer tank 61 and pumped by a pump 62 to a water separator 63 to obtain the product 8. Optionally, the water may be recirculated.

However, other configurations may be possible. The table above is not to be viewed as restrictive.

According to the present disclosure, a method and system for processing of insects or insect larvae is provided which effectively eliminates pathogens and prevents their growth while at the same time preserving the properties of the food product such as the colour. Thus, it is possible to eliminate resistant forms of pathogens, namely spores, which are usually difficult to control with a 1-step heating process. Moreover, the present disclosure provides a more or less instant insect killing step, which is therefore in line with animal welfare considerations. The method and system can also be run continuously or using the buffer tank, thus allowing for output to both continuous or batch run operations.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. Method for processing insects or insect larvae, the method comprising:
a first heating step of heating the insects or insect larvae in a first fluid at a temperature of 40°C to 105°C,
cooling the insects or insect larvae in a second fluid, and
a second heating step of heating the insects or insect larvae in a third fluid at a temperature of 40°C to 105°C, wherein the second heating step is performed after the cooling step.

2. Method according to claim 1, wherein at least one of the first, second and third fluid is water or steam.

3. Method according to claim 1 or 2, wherein the first and/or the second heating step is performed at a temperature of 75°C to 105°C.

4. Method according to one of the preceding claims, wherein the cooling step is performed at a temperature of 10°C to 30°C, preferably 20 to 25°C.

5. Method according to one of the preceding claims, wherein
the first heating step has a duration of 5 to 15 minutes, preferably 8 to 12 minutes, and/or
the cooling step has a duration of 10 to 45 minutes, preferably 25 to 35 minutes, and/or
the second heating step has a duration of 10 seconds to 5 minutes, preferably, 10 seconds to 1.5 minutes.

6. Method according to one of the preceding claims, wherein the method is performed automatically.

7. Method according to one of the preceding claims, wherein the method comprises spreading the insects or insect larvae during the first heating step and/or the second heating step and/or the cooling step.

8. Method according to one of the preceding claims, wherein the method further comprises separating the insects or insect larvae from the fluid after the first heating step and/or the cooling step and/or the second heating step.

9. Method according to one of the preceding claims, further comprising storing the insects or insect larvae in a buffer tank after the second heating step.

10. Method according to one of the preceding claims, wherein additional insects or insect larvae are added for the second heating step.

11. Method according to one of the preceding claims, wherein the insects or insect larvae are transported, preferably together with the fluid, by pumps between the first heating step, the cooling step and the second heating step.

12. Method according to one of the preceding claims, wherein the method is performed with live or dead insects or insect larvae.

13. Method according to one of the preceding claims, wherein the method further comprises an additional heating step before the first heating step, wherein preferably the heating step is performed at a temperature of 90°C to 110°C.

14. Method according to one of the preceding claims, wherein the insects or insect larvae are kept in water for at least 50% of the processing time, preferably for at least 80%.

## Patentansprüche

1. Verfahren zur Verarbeitung von Insekten oder Insektenlarven, wobei das Verfahren aufweist:
einen ersten Erwärmungsschritt des Erwärmens der Insekten oder Insektenlarven in einem ersten Fluid bei einer Temperatur von 40°C bis 105°C,
Abkühlen der Insekten oder Insektenlarven in einem zweiten Fluid, und
einen zweiten Erwärmungsschritt des Erwärmens der Insekten oder Insektenlarven in einem dritten Fluid bei einer Temperatur von 40°C bis 105°C, wobei der zweite Erwärmungsschritt nach dem Abkühlungsschritt durchgeführt wird.

2. Verfahren nach Anspruch 1, wobei mindestens eines des ersten, zweiten und dritten Fluids Wasser oder Dampf ist.

3. Verfahren nach Anspruch 1 oder 2, wobei der erste und/oder der zweite Erwärmungsschritt bei einer Temperatur von 75°C bis 105°C durchgeführt wird.

4. Verfahren nach einem der vorhergehenden Ansprüche, wobei der Abkühlungsschritt bei einer Temperatur von 10°C bis 30°C, vorzugsweise 20 bis 25°C, durchgeführt wird.

5. Verfahren nach einem der vorhergehenden Ansprüche, wobei
der erste Erwärmungsschritt eine Dauer von 5 bis 15 Minuten, vorzugsweise 8 bis 12 Minuten, aufweist, und/oder
der Abkühlungsschritt eine Dauer von 10 bis 45 Minuten, vorzugsweise 25 bis 35 Minuten, aufweist, und/oder
der zweite Erwärmungsschritt eine Dauer von 10 Sekunden bis 5 Minuten, vorzugsweise von 10 Sekunden bis 1,5 Minuten, aufweist.

6. Verfahren nach einem der vorhergehenden Ansprüche, wobei das Verfahren automatisch durchgeführt wird.

7. Verfahren nach einem der vorhergehenden Ansprüche, wobei das Verfahren das Ausbreiten der Insekten oder Insektenlarven während des ersten Erwärmungsschritts und/oder des zweiten Erwärmungsschritts und/oder des Abkühlungsschritts aufweist.

8. Verfahren nach einem der vorhergehenden Ansprüche, wobei das Verfahren ferner das Trennen der Insekten oder Insektenlarven von dem Fluid nach dem ersten Erwärmungsschritt und/oder dem Abkühlungsschritt und/oder dem zweiten Erwärmungsschritt aufweist.

9. Verfahren nach einem der vorhergehenden Ansprüche, das ferner das Lagern der Insekten oder Insektenlarven in einem Pufferbehälter nach dem zweiten Erwärmungsschritt aufweist.

10. Verfahren nach einem der vorhergehenden Ansprüche, wobei für den zweiten Erwärmungsschritt zusätzliche Insekten oder Insektenlarven zugegeben werden.

11. Verfahren nach einem der vorhergehenden Ansprüche, wobei die Insekten oder Insektenlarven, vorzugsweise zusammen mit dem Fluid, durch Pumpen zwischen dem ersten Erwärmungsschritt, dem Abkühlungsschritt und dem zweiten Erwärmungsschritt transportiert werden.

12. Verfahren nach einem der vorhergehenden Ansprüche, wobei das Verfahren mit lebenden oder toten Insekten oder Insektenlarven durchgeführt wird.

13. Verfahren nach einem der vorhergehenden Ansprüche, wobei das Verfahren ferner einen zusätzlichen Erwärmungsschritt vor dem ersten Erwärmungsschritt aufweist, wobei der Erwärmungsschritt vorzugsweise bei einer Temperatur von 90°C bis 110°C durchgeführt wird.

14. Verfahren nach einem der vorhergehenden Ansprüche, wobei die Insekten oder Insektenlarven während mindestens 50 % der Verarbeitungszeit, vorzugsweise während mindestens 80 %, in Wasser gehalten werden.

## Revendications

1. Procédé de traitement d'insectes ou de larves d'insectes, ledit procédé comprenant :
une première étape de chauffage consistant à chauffer les insectes ou les larves d'insectes dans un premier fluide à une température comprise entre 40 °C et 105 °C,
à refroidir les insectes ou les larves d'insectes dans un deuxième fluide, et
une deuxième étape de chauffage consistant à chauffer les insectes ou les larves d'insectes dans un troisième fluide à une température comprise entre 40 °C et 105 °C, la deuxième étape de chauffage étant effectuée après l'étape de refroidissement.

2. Procédé selon la revendication 1, où au moins un fluide entre le premier, le deuxième et le troisième fluide est de l'eau ou de la vapeur.

3. Procédé selon la revendication 1 ou la revendication 2, où la première et/ou la deuxième étape de chauffage sont effectuées à une température comprise entre 75 °C et 105 °C.

4. Procédé selon l'une des revendications précédentes, où l'étape de refroidissement est effectuée à une température comprise entre 10 °C et 30 °C, de préférence entre 20 °C et 25 °C.

5. Procédé selon l'une des revendications précédentes, où
la première étape de chauffage a une durée comprise entre 5 et 15 minutes, de préférence entre 8 et 12 minutes, et/ou
l'étape de refroidissement a une durée comprise entre 10 et 45 minutes, de préférence entre 25 et 35 minutes, et/ou
la deuxième étape de chauffage a une durée comprise entre 10 secondes et 5 minutes, de préférence entre 10 secondes et 1,5 minute.

6. Procédé selon l'une des revendications précédentes, où le procédé est effectué automatiquement.

7. Procédé selon l'une des revendications précédentes, où le procédé comprend l'étalement des insectes ou des larves d'insectes pendant la première étape de chauffage et/ou la deuxième étape de chauffage et/ou l'étape de refroidissement.

8. Procédé selon l'une des revendications précédentes, où le procédé comprend en outre le retrait des insectes ou des larves d'insectes hors du fluide après la première étape de chauffage et/ou l'étape de refroidissement et/ou la deuxième étape de chauffage.

9. Procédé selon l'une des revendications précédentes, comprenant en outre le stockage des insectes ou des larves d'insectes dans un bac tampon après la deuxième étape de chauffage.

10. Procédé selon l'une des revendications précédentes, où des insectes ou des larves d'insectes supplémentaires sont ajoutés pendant la deuxième étape de chauffage.

11. Procédé selon l'une des revendications précédentes, où les insectes ou les larves d'insectes sont transportés, de préférence avec le fluide, par des pompes entre la première étape de chauffage, l'étape de refroidissement et la deuxième étape de chauffage.

12. Procédé selon l'une des revendications précédentes, où le procédé est mis en œuvre avec des insectes ou des larves d'insectes vivants ou morts.

13. Procédé selon l'une des revendications précédentes, où le procédé comprend en outre une étape de chauffage additionnelle avant la première étape de chauffage, l'étape de chauffage étant de préférence effectuée avec une température comprise entre 90 °C et 110 °C.

14. Procédé selon l'une des revendications précédentes, où les insectes ou les larves d'insectes sont maintenus dans l'eau pendant au moins 50 %, de préférence pendant au moins 80 %, du temps de traitement.
